# EUROPEAN PATENT SPECIFICATION

(11) **EP 0 777 176 B1**
(45) Date of publication and mention of the grant of the patent: **09.10.2002**
(21) Application number: 96308607.9
(22) Date of filing: 28.11.1996
(51) Int. Cl.: G06F 3/12, G06F 17/60, H04L 29/06

(54) **Document server for processing a distribution job in a document processing system**
Dokumenten-Server zur Verarbeitung eines Verteilungsjobs in einem Dokumentenverabeitungssystem
Serveur de document pour traiter une tâche de distribution dans un système de document

(30) Priority: 28.11.1995 US 563316; 28.11.1995 US 563808
(43) Date of publication of application: 04.06.1997
(73) Proprietor: XEROX CORPORATION, Rochester, New York 14644 (US)
(72) Inventor: Austin, Paul R., Webster, NY 14580 (US); Kibler, Wendell L., Ontario, NY 14519 (US); Kulbida, Christopher, Fairport, NY 14450 (US); Haehn, Steven E., Rochester, NY 14625 (US); Bunker, Keith G., Hilton, NY 14468 (US)
(74) Representative: Grünecker, Kinkeldey, Stockmair & Schwanhäusser Anwaltssozietät

(56) References cited:
- EP-A- 0 529 808
- IBM TECHNICAL DISCLOSURE BULLETIN, vol. 35, no. 6, November 1992, NEW YORK, US, pages 286-287, XP002027141 ANONYMOUS: "Use of Page Records to Synchronize Printing while Converting."

## Description

The present invention relates generally to a system for managing the distribution of job copies in a document processing system and, more particularly, to a document server in which a distribution agent and document manager function cooperatively to optimize the delivery of the job copies among a plurality of virtual services.

Typically, a composite job ticket relates to a single image data set, copies of which are intended for delivery to multiple destinations. In one sense, such a job may be thought of as a "distribution job" since the job, with its attendant image data, is being distributed to a plurality of recipients. Servers suitable for coordinating the storage and/or processing of a nondistribution job (i.e., a job with a single set of image data intended for delivery to one destination) are disclosed in the following references:

US-A-5,113,494 discloses an arrangement in which a plurality of nodes communicate with one another by way of a local area network communication line. In one example, a hardcopy of a job could be processed at a scan node while an electronic copy of the same job could be processed at a print node.

US-A-5,179,637 discloses a system for distributing print jobs received from a print image data source among a set of print engines and associated processors. One or more data files containing the information required to print one or more copies of an image are submitted to a scheduler and the scheduler interprets the job control information in the data file(s) for the image and passes the data files(s) to an image processor.

US-A-5,220,674 discloses a local area print server which functions in cooperation with a plurality of clients and a plurality of printers to facilitate communication between the clients and the printers. The server includes various subsystems, e.g., a server job controller for managing multiple job requests transmitted from the clients to the server.

US-A-5,179,637 discloses a document processing system in which copies of a job are distributed among multiple processors, with a scheduler, to maximize parallel processing of the job. Such a scheduler would result in copies of a single set of image data being distributed among multiple processors for maximizing parallel processing. This approach is unacceptable in those situations where unit machine cost (UMC) is critical, particularly for a streamlined document processing system which seeks to use as few processors as possible.

EP-A-0 529 808 describes a print manager system comprising a print manager and using job tickets.

There are servers that use a single document manager based on the protocol of DPA ISO 10175 which streamline document processing and allow for minimization of UMC. Examples of such servers may be found in products made available by Xerox Corporation under the "Document Centre" product name. Document Centre products, however, are not believed to currently possess the functionality necessary for both executing and managing a distribution job, i.e., a job calling for multiple copies of the job to be delivered to and/or outputted at multiple destinations. It would be desirable to provide a system which could be readily coupled with a document manager for providing such functionality.

In accordance with one aspect of the present invention, there is provided a server for processing a distribution job in a document processing system, the distribution job including an image data set, as well as a first job ticket and a second job ticket. The first and second job tickets include first and second sets of attributes, respectively, describing a manner in which first and second copies of the image data set are to be stored in or processed by the document processing system. The document processing system includes a first virtual service for storing or processing the first copy of the image data set in accordance with the first attribute set and a second virtual service for storing or processing a second copy of the image data set in accordance with the second attribute set. The server includes: a document manager, communicating with said first and second virtual services, for coordinating the storing or processing of the first and second copies of the image data set at said first and second virtual services; a distribution agent, communicating with said document manager, for receiving the first and second job tickets; and said distribution agent transmitting the first job ticket to said document manager so that said document manager routes the first copy of the image data set and the first job ticket to the first virtual service, and said distribution agent transmitting the second job ticket to said document manager so that said document manager routes the second copy of the image data set and second job ticket to the second virtual service.

In one embodiment of the present invention there is provided a document server, including a client, for processing a distribution job in a document processing system. The distribution job includes an image data set, as well as a first job ticket and a second job ticket, the first and second job tickets including first and second sets of attributes, respectively, each of the first and second attribute sets describing a manner in which first and second copies of the image data are to be stored in or processed by the document processing system. The document processing system includes a first virtual service for storing or processing the first copy of the image data set in accordance with the first attribute set and a second virtual service for storing or processing the second copy of the image data set in accordance with the second attribute set. The document server includes: a document manager, communicating with the first and second virtual services, for coordinating the storing or processing of the first and second job copies in the first and second virtual services; a distribution agent, communicating with said document manager, for receiving the first and second job tickets of the distribution job as a single package, said distribution agent transmitting a copy of the first job ticket of the single package to said document manager so that said document manager facilitates routing of both the first copy of the image data set and the copy of the first job ticket to the first virtual service, and said distribution agent transmitting a copy of the second job ticket of the single package to said document manager so that said document manager facilitates routing of both the second copy of the image data set and the copy of the second job ticket to the second virtual service; and said distribution agent receiving a distribution job alteration request after the copies of the first and second job tickets have been transmitted to said document manager, the distribution job alteration request including information indicating an alteration to be made in one or more of the attributes of each of the first and second attribute sets, said distribution agent, in response to receiving the distribution job alteration request, transmitting a task halting request to said document manager, said document manager, in response to receiving the task halting signal, causing any ongoing activities, relative to the first and second copies of the image data set, to be halted.

In accordance with another aspect of the present invention there is provided a document server, including a client, for processing a distribution job in a document processing system. The distribution job includes an image data set, as well as a first job ticket and a second job ticket. The first and second job tickets include first and second sets of attributes, respectively, each of the first and second attribute sets describing a manner in which first and second copies of the image data set are to be stored in or processed by the document processing system. The document processing system includes a first virtual service for storing or processing a first copy of the image data set in accordance with the first attribute set and a second virtual service for storing or processing a second copy of the image data set in accordance with the second attribute set. The document server includes: a document manager, communicating with the first and second virtual services, for coordinating the storing or processing of the first and second copies of the image data set in the first and second virtual services; a distribution agent, communicating with said document manager, for receiving the first and second job tickets of the distribution job as a single package, said distribution agent transmitting a copy of the first job ticket of the single package to said document manager, so that said document manager facilitates routing of both the first copy of the image data set and the copy of the first job ticket to the first virtual service, and said distribution agent transmitting a copy of the second job ticket of the single package to said document manager, so that said document manager facilitates routing of both the second copy of the image data set and the copy of the second job ticket to the second virtual service; and said distribution agent receiving a first distribution job status request after the copies of the first and second job tickets have been transmitted to said document manager, said distribution agent transmitting a second distribution job status request, to said document manager, for directing said document manager to determine an extent to which each of the first copy of the image data set and the second copy of the image data set has been processed by the document server, said document manager, in response to receiving the second distribution job status request, causing the extent to which each of the first copy of the image data set and the second copy of the image data set has been processed by the document server to be determined.

The present invention will now be described, by way of example, with reference to the accompanying drawings, in which:
Figure 1 represents a schematic view of an abstract model of a microkernal suitable for implementing the print server platform of the present invention;
Figure 2 represents a schematic view of a functional architecture of the microkernal;
Figure 3 represents a schematic view of a connectivity subsystem within the context of the microkernal;
Figure 4 represents a schematic view of a job distribution subsystem, including a portion of the microkernal functional architecture of Figure 2 and a distribution agent, in which lines representing the process flow of a distribution job are shown;
Figure 5 represents a schematic view of a portion of the job distribution subsystem of Figure 4 in which a virtual service comprises a job distribution subsystem;
Figure 6 represents a schematic view of a model for facilitating widespread distribution of the distribution job; and
Figure 7 represents a schematic view of the job distribution subsystem of Figure 4 in which lines representing the process flow of distribution job modification instructions are shown.

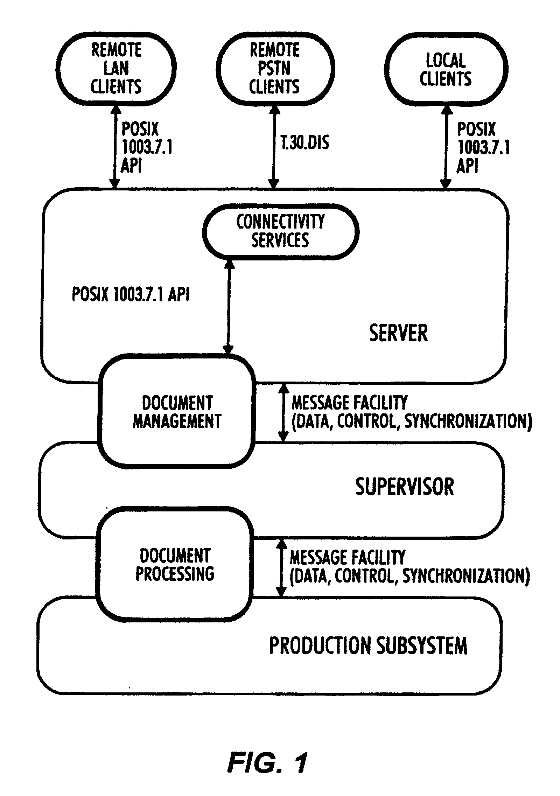

Referring to Figure 1, an abstract model of a Microkernel mapped into a model, based on DPA ISO 10175/POSIX.7 IEEE 1003.7, is shown. The external interfaces of the Microkernel are fully compliant with the POSIX.7 IEEE 1003.7a standard. The DPA model considers the interface between the Supervisor (or Server) and the Production System to be product dependent.

This model is considered abstract because it demonstrates a mapping, and does not specify architectural detail. This model serves two purposes. First, it helps clarify the relationship of the Microkernel subsystems to a standard. Second, it emphasizes the standardization of the Microkernel application programming interfaces (APls). The abstract model provides a partitioning of the Microkernel into three major subsystems: Connectivity Services, Document Management, and Document Processing.

In the DPA ISO 10175 / POSIX.7 IEEE 1003.7a print system model, the functionality is broken up as follows:
_ A Print Client
_ A Print Server
_ A Print Supervisor
_ A Print Production System

The DPA/POSIX Print Server handles and processes requests from Print Clients (for example, a user from a workstation). The Server is responsible for validating the requests and adding them to a data base (or queue). The Server contains a scheduler which locates the right printer for the job requirements, and schedules and tracks the job on the printer. The server receives events from the Print Supervisor (which is responsible for driving a printer). The Server reports status and significant events to the user and logs accounting information.

Referring still to Figure 1, the Microkernel has a Document Management (DM) subsystem that performs most of the DPA/POSIX Server functionality The DM subsystem validates user requests, queues requests, spools document data, schedules the job for the device, and collects and maintains status information. The DM subsystem extends the DPA/POSIX Server in some aspects, since it can be configured to handle scan jobs (for filing or faxing) and copying jobs. In the Microkernel, significant events such as errors reported by other subsystems (functionally equivalent to the DPA/POSIX model's Supervisor and Production components) are handled by a System Control subsystem.

The DPA/POSIX Print Supervisor is responsible for driving a specific printer and, in one operational mode, prints one job at a time. It is responsible for interpreting the job request, which includes interpreting the contents of the document(s) within a request. The Print Supervisor also reconciles attributes associated with the request and those found during interpretation of the document. Preferably, the Supervisor controls the printing of the job completely. It is responsible for such activities as downloading fonts and transferring data to the printer. The role of the DPA/POSIX Print Supervisor is implemented by the Document Manager and Document Processing subsystems in the Microkernel.

The DPA/POSIX Print Production System is defined to be product specific. In general, the Production System is responsible for processing document or image data and handling typical functions such as marking, collating, and finishing. The Microkernel contains support for production systems which are more capable than traditional printing devices. Processing of documents or image data is implemented by the Document Processing subsystem. Marking, collating, and finishing are not part of the Microkernel. These functions are typically provided by PDT-specific services and applications.

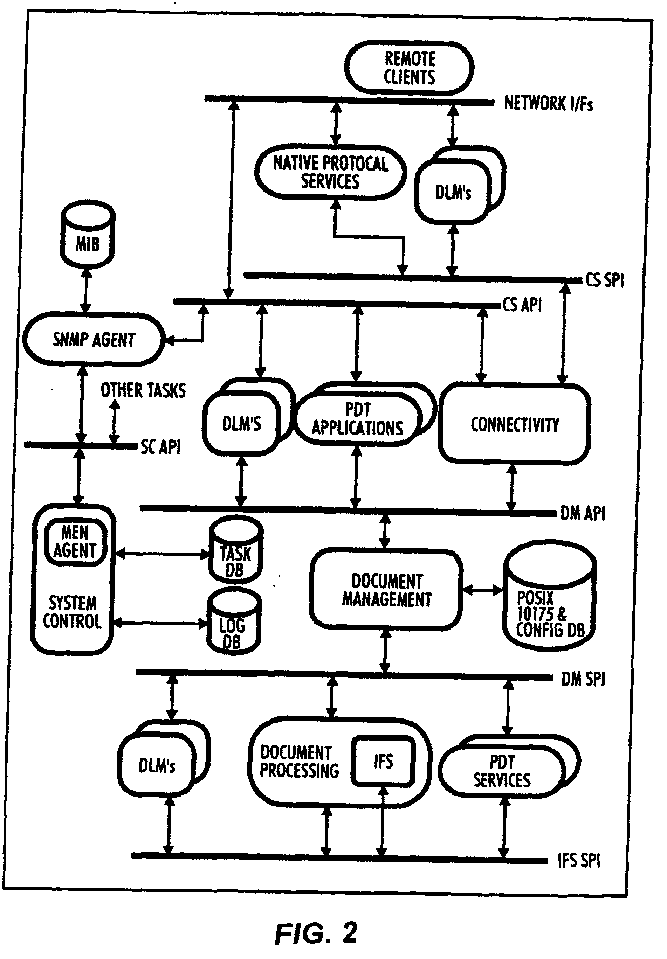

Referring to Figure 2, a functional architecture of the Microkernel is shown. Remote clients interact with the Microkernel-based products via either the native Protocol Services or dynamic loadable modules (DLMs) integrated with the Microkernel. The Protocol Services route requests from remote clients to the Connectivity subsystem in the Microkernel. The connectivity subsystem, as discussed in further detail below, translates the requests from the Protocol services into POSIX commands to the Microkernel server (i.e. the DM).

In general, a network or point-to-point print submission originates at the Protocol Services level of the Connectivity Services (CS) subsystem. Each Protocol Service listens on a well-known socket for a connection indication. When a Protocol Service receives the connection indication it submits a job request to the Connectivity Core. The Connectivity Core will translate this request into a DPA-compatible format and forward it to the DM subsystem. When the job submission is granted, the Protocol Services can submit one or more documents. Document submission is achieved by sending a document request and an I/O descriptor to the Connectivity Core. This will also be translated and forwarded to the DM subsystem.

After the document has been accepted, the Protocol Service starts to receive data from the underlying protocol stack and writes it into the I/O descriptor. This data will read on the other side of the I/O descriptor by a consumer or will be spooled somewhere in the system. When the remote client indicates that there is no more data, the I/O descriptor is closed signaling the end of this specific document. After all documents have been received, a job termination request is sent from the Protocol Services to the Connectivity Core, which then forwards it to the DM. Eventually, this request will be completed by the system, and the Protocol Service will release all resources associated with the job.

The core of the Microkernel is the DM subsystem which implements the DPA Server functionality. All clients of DM (i.e., the Connectivity Services subsystem, DLMs, and PDT applications) access DPA Services via the Client Request API which conforms to the POSIX 1003.7a standard. The Client Request API hides the implementation details of the Object Data Store, which stores POSIX and other user objects. DM provides for document sniffing, spooling, and scheduling services. Service providers (i.e., Document Processing and PDT Marking applications) can register their services with DM. The DM subsystem schedules the processing of documents to various service providers depending on the processing pipeline and PDL types associated with the job via the service provider interface (SPI). This flexibility enables parallel submission of multiple documents to multiple consumers' pipelines. This capability can enable multiple lOTs to be effectively serviced for achieving high throughput in the system.

Referring still to Figure 2, Document Processing (DP), which includes the Image Frame Store (IFS) and the instantiation of at least one producer, is provided with the Microkernel. DP processes documents into images (full frame buffers or raster-scan bands, depending on the configuration of the Microkernel). The Image Frame Store assigns producers to consumers. Consumers can be PDT services or DLMs, such as the marking services which control the processing of images provided by DP or any other production-oriented DLM (such as a scanner service).

System Control (SC) is responsible for startup, shutdown, and synchronization of the system. A MEN Agent in the SC subsystem provides the capability for the clients to register for delivery of events and messages, processing event occurrences, and cancelling previous registrations. A SNMP Agent is responsible for remote configuration of the Microkernel by maintaining a MIB Database in the Microkernel and registering interesting events with the MEN Agent on behalf of the SNMP manager. The SNMP Agent provides the mechanism for changing the network configuration information on the Microkernel.

The Microkernel provides a highly extensible framework, along with an important set of core capabilities necessary for implementing a variety of multifunction devices in the office.

Some of the clients and/or service providers are within the Microkernel. They are known as the Native Protocol Services. Others are external, such as the optional DLMs and PDT applications

A Protocol Service consists of Protocol Modules (PMs) and Protocol Stacks. A Protocol Service is responsible for translating different types of requests from remote hosts into a common format and for relaying these requests to the Microkernel.

The currently disclosed embodiment contemplates support for local access by other Microkernel subsystems, PDT Applications, and DLMs to Fax/Modem facilities, network operations, and to the various topologies and environments supported by the CS subsystem. Limited support for accessing the IPS SNMP/MIB database by providing a simple, light-weight interface to IPS SNMP operations is also contemplated.

Within the Microkernel everything is composed of requests and answers. A job consists of a request upon the system. The Protocol Service interface translates internal PM job-submission commands to POSIX commands. The job submission consists of a Data Store handle (optional) and a job code. After a job is submitted, a response function is called. This is the callback function that the Protocol Services provide. If the job is rejected, the connectivity core releases the handle.

After a job has been accepted, it can be followed by document submission requests. Each document submission request contains a job handle (the previously constructed handle which identifies the job), a document handle, and a blocking file descriptor (read-end of a pipe).

The data for the job is placed into a write-end of the pipe. At the end of a document, the Protocol Services close their connection for this pipe. This signals the end of the document for the read-end of this pipe and for the consumer.

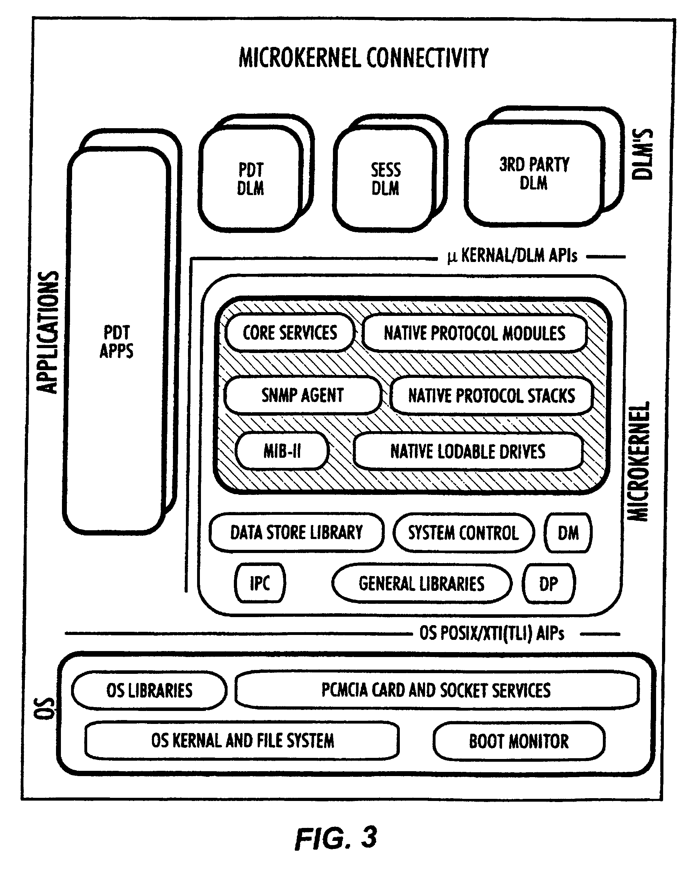

Referring to Figure 3, a CS subsystem, adapted for use with the Microkernel software architecture, is shown. The CS subsystem provides the following services:
_Core Services
_Native Protocol Services
_SNMP Agent V.2 over UDP / IP and IPX
_Native Protocol Stacks
_MIB - II
_Dynamic Loadable Protocol Services

The Core Connectivity Services provide low-level services for handling synchronization and job control (i.e., submitting and accepting jobs). These low-level services are used by the Protocol Services of the CS subsystem. The Core CS also provide initialization, configuration, startup, shutdown, diagnostics, message facilities, and error logging.

The Core CS provide a registration mechanism for the PM and Protocol Stack services. which allows the CS subsystem to be configurable and to support appropriate protocol layering. Core Connectivity is also responsible for registering its configuration and capabilities with System Control.

The Core CS provide the common interface to the SMart Microkernel for the underlying Protocol Modules. Core Connectivity also provides lower-level services and facilities such as a messaging facility, a registration mechanism, and a basic flow-control mechanism.

Protocol Module (PM) services implement printer access protocols, such as, Banyan, AppleTalk PAP, Novell PSERVER, DPA ISO 10175/POSIX.7 IEEE 1003.7a gateway, and UNIX LPR/LPD. In addition to implementing the PM layer, these services are responsible for functions such as high-level flow control, interfacing to the protocol stacks, managing multiple PM sessions, configuration, registration, and diagnostics.

The PM services provide a well-defined API for interaction with the Core CS and Protocol Stack Services. The PM services API allows for the Core CS to interact with the PMs without knowing about the specific PM implementation. This encapsulation and modularity allows the PM services component to be easily extensible. In the simplest configuration, there can only be a single PM service module within the Connectivity Services subsystem.

PMs provide additional functionality such as configuration or filing support, where applicable. The following PMs and corresponding protocol stacks are native to the SMart Microkernel:
_Serial XON/XOFF
_Parallel IEEE P1284
_LPD (rfc1179) over TCP/IP
_Novell IPX/SPX PServer version 3.1x

Other PMs and their corresponding protocol stacks implemented as DLMs, are:
_AppleTalk
_LAN Server
_Banyan VINES
_DPA 10175-compliant gateway
_Novell IPX/SPX PServer 4.x

The Protocol Stack services implement the data link-up through the transport, session, or presentation layers defined in the ISO networking model. These protocol stacks include:
_Novell IPX/SPX
_IPS TCP/IP
_IPS UDP/IP
_CCITT Fax G3 (provided as a DLM)
_AppleTalk (EtherTalk/LocalTalk/TokenTalk) (provided as a DLM)

These Protocol Stack services are responsible for low-level flow control, interfacing to device drivers via standard APls such as AT&T SVID Data Link Protocol Interface (DLPI), managing multiple sessions within each layer, configuration, startup/shutdown, and diagnostics.

The Protocol Stack services support standard APls such as STREAMS, DLPI, and XTI (TLI). They are also responsible for supporting authentication and authorization services to the level which they are defined by specific protocol definitions. The Protocol Stack service is configurable and in its simplest form, can only consist of a single stack. Protocol Stacks and Protocol Modules Services can be dynamically added to the system by using DLM conventions.

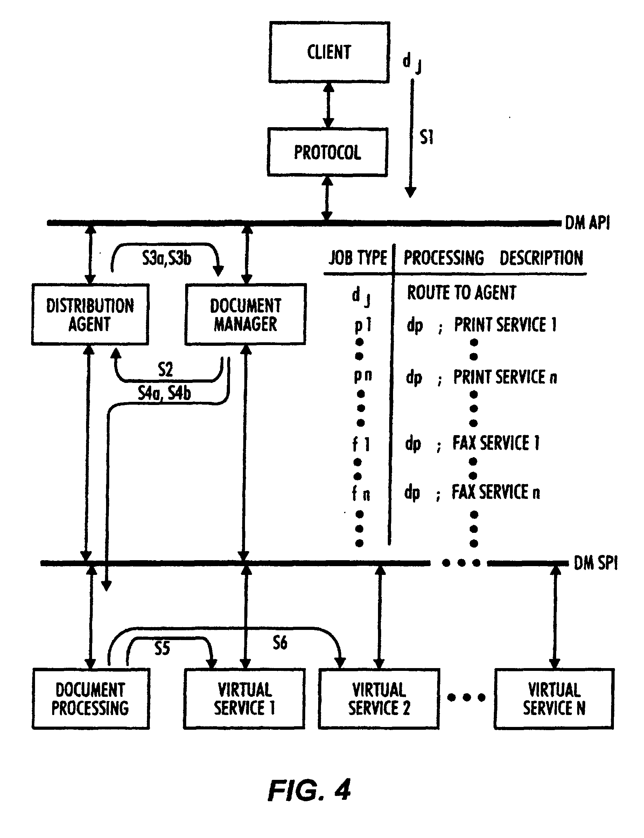

Referring to Figure 4, a system for processing a composite or distribution job is shown. As will be recognized, the illustrated embodiment of Figure 4 includes various components provided in the architecture of Figure 2. For ease of discussion, a significant number of the components shown in Figure 2 have been omitted from the distribution system of Figure 4, but in actual practice, the distribution system would preferably include most, if not all of, the omitted components. It will be further recognized that the system of Figure 4 includes a distribution agent ("DA") which functions in parallel with the document manager. As shown in Figure 4, the DA communicates with the DM by way of interfaces DM API and DM SPI. It will appear that all of the advantages of the DA can be obtained whether it assumes a modular form, relative to the DM, or is actually integrated with the code of the DM.

As further shown in Figure 4, the PDT services are represented in the form of virtual service 1 ("VS1") through virtual service N ("VSN"). In the example discussed below, VS1 is a print service and VS2 is a fax service. While the virtual services are shown as separate entities, in actual practice two or more virtual services might be implemented on a single platform. For example, in a conventional multifunctional copier, copy, print and fax services are provided by a single platform. Additionally, as will be appreciated by those skilled in the art, each virtual service could be implemented with hardware, software or a combination of the two.

Referring still to Figure 4, in one mode of operation, an exemplary distribution job ("dj") including a print job and a fax job is developed at the client in the form of a page description language ("pdl") file - the dj further includes a compound ticket with control instructions for processing associated jobs. As will be appreciated by those skilled in the art, the client could assume various forms without affecting the preferred embodiment of the currently described technique. In one example, the client could include a network copier and programming of the dj would be performed with a suitable user interface at the copier. Preferably, the processing operation(s) and ultimate destination of each job is preregistered with the DM for storage in the form of a table shown in Figure 4. In developing the file, the underlying image data for the file as well as job tickets for each of the jobs to be stored/processed are embedded in the pdl file. Additionally, the file or distribution job is identified with a suitable dj identifier in, for example, a header portion of the file.

Preferably, the order in which the jobs are programmed determines the order in which the jobs are distributed in the document processing system of Figure 4. Pursuant to the execution of step S1, dj is transmitted to the DM by way of a suitable protocol and interface of the types discussed above. At the DM, the job is examined and, upon reading the dj identifier, the DM, by reference to the table, routes the dj to the DA without further processing (S2). As will be appreciated, this automatic routing eases the processing burden of the DM since the DM does not have to parse the information of the dj and take the actions necessary for placing the dj in order for processing with the DP and VSs.

In response to receiving the dj from the DM, the DA provides for the storage of the respective job tickets of the print and fax jobs. Additionally, image data necessary for executing the jobs is stored. As will be appreciated, in one instance, the DA may store the image data and ticket information memory (e.g. Disk) and maintain references as to the locations at which the image data is stored. In order to execute the distribution job, the DA transmits the jobs in sequence, by way of S3a and S3b, to the DM.

As should be appreciated, the jobs are transmitted in the order in which they were programmed at the client. Moreover, S3a and S3b can be executed at moments in time that are virtually concurrent, or S3b can be executed at a time that is considerably subsequent to S3a. This permits the processing of a second job to be made contingent on the suitable processing of a first job. For example, the first job could be a proof job calling for the printing of a proof set and the second job could call for a plurality of sets to be printed upon approval of the proof set.

By reference to the above-mentioned table of Figure 4, the DM routes the print job to document processing for interpretation (S4a) and to the VS1 (S5) for printing. Similarly, the fax job is interpreted (S4b) and then transmitted with VS2 to a suitable receiver. It should be appreciated that one of the jobs transmitted to the DM by the DA could be a distribution job so that a job submission would be initiated by one of the VSs. For example, the fax job provided to VS2 could be intended for transmission to a remote VS where the job could be further distributed among selected recipients.

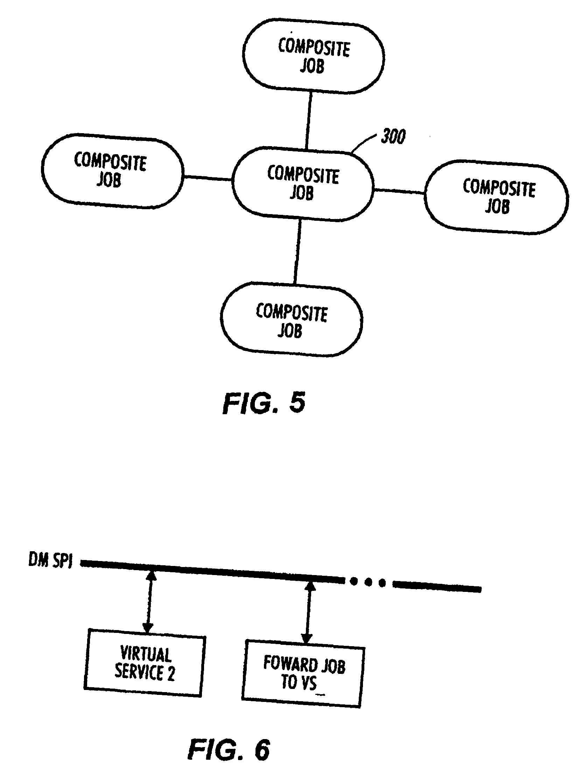

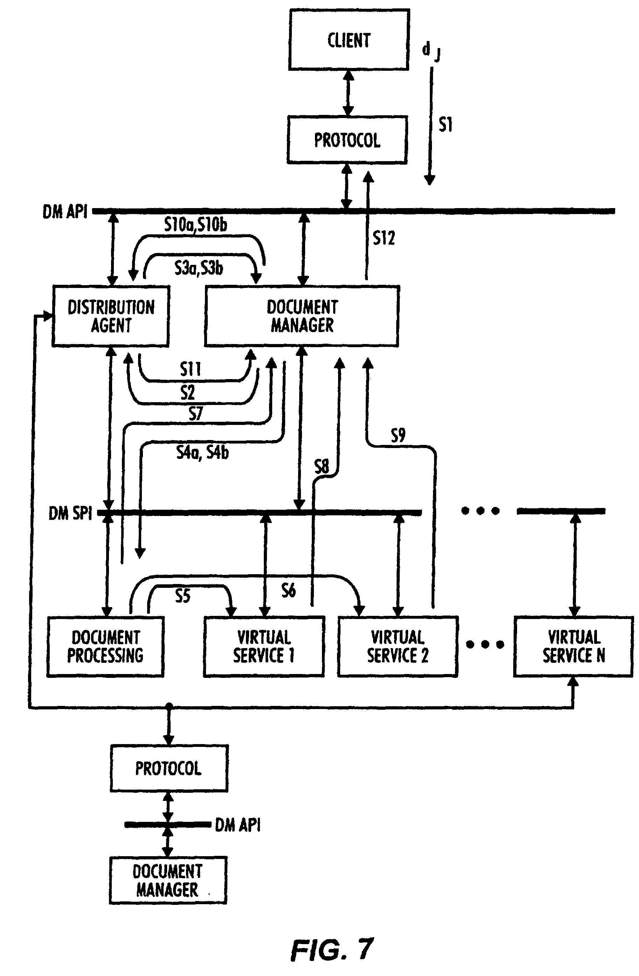

As shown in Figure 5, a single distribution job could serve as the basis for the processing of several distribution jobs where the core job 300 serves as the basis for distribution jobs executed at various VSs which may be disposed throughout the United States or the World. Moreover, as shown in Figure 6, one of the jobs programmed for the dj could be transmitted to one or more services, other than the ones associated with the DM SPI by simply mapping one of the associated services of the DM SPI with one or more services remote to the associated services. Finally, as illustrated in Figure 7, the preferred modularity of the DA permits communication of djs between the the DA and other remote DMs either directly, by way of a second protocol and a second DM API, or indirectly, by way of one of the virtual services.

Referring again to Figure 4, in an extension of the above-described embodiment, the DA is provided with a database (db) and profiles for various network users of the document processing system of Figure 2 are provided. Preferably, each profile would include a list of virtual services available to the network users and the preferred format(s) of each network user.

In one example, the client specifies recipients, in the dj job ticket, by name and, in turn, the DA consults the db to determine the recipients preferred document format(s) and/ or preferred transport mechanism(s). The DA then selects a common document format (translatable from the original format) and/or transport mechanism (optimizing cost or time, for example) for delivering associated documents.

Once the information regarding a distribution job is resident at the DA, various operations can, depending on certain conditions, be performed relative to one or more jobs in the distribution job. Among other operations, one or more attributes of the one or more jobs can be cancelled or modified, depending on the extent to which the one or more jobs have been processed. As will appear, to perform cancellation/modification operations on one one or more jobs of the dj it may desirable to pause or halt processing of the one or more jobs. Additionally, the status of one or more of the jobs in the dj can be determined, and one or more of the dj jobs can be promoted ahead of one or more other jobs about to be processed by one or more of the VSs. As will appear, the respective procedures for modifying, cancelling or promoting are quite similar. Thus, only the procedure for modifying attributes of a print job and a fax job will be discussed.

Referring to Figure 7, the exemplary procedure for modifying the attributes of the print and fax jobs is discussed. Initially, the client transmits distribution modification instructions ("dj mod") to the document manager (S1) and the document manager routes the dj mod to the DA (S2) for processing thereby. As will be appreciated, the dj mod could comprise one or more instructions with respect to cancelling one or more job attributes or promoting one of the dj jobs ahead of other jobs currently queued up for processing by the VSs. Moreover, the exemplary procedure of Figure 7 is applicable for performing operation(s) on one job or many jobs in a given dj and need not be performed with respect to all of the jobs in the given dj.

In response to receiving the dj mod, the DA transmits pause instructions (S3a, S3b) for the print and fax jobs to the DM. For the print job, the DM transmits one or more instructions to the DP (S4a) and the VS1 (S5) indicating that processing is to be halted on the print job. In one contemplated example, the DA indicates to the DM one or more attributes of the print job to be modified in the job tickets at VS1. In a similar manner, signals transmitted by way of S4b and S6 are used to halt processing of the fax job. As will appear, halting a job in the middle of processing permits the corresponding job ticket for that job to be altered at either the DA or the associated VS (VS1 in the case of the print job and VS2 in the case of the fax job).

In response to halting processing at the DP, a confirmation signal, at S7, is transmitted back to the DM. Additionally, to confirm that processing of the jobs has been halted or paused, confirmation signals are transmitted from VSs 1 and 2 to the DM at S8 and S9. As will be understood, the current example assumes that attributes of the print and fax jobs can be modified; however, in another example, the signals transmitted from the DP and VSs will indicate that the job(s) cannot be modified due to the extent to which the job(s) has been processed.

Upon receiving confirmation signals from the DP and VSs, the DM informs the DA that job processing has been made to each of the print job (S10a) and the fax job (S10b). In response to such information the DA makes the modifications required in the job tickets for the print job and fax job. To indicate that the modifications have been made to the dj, the DA sends a packet, having the dj identifier, to the DM (S11). Upon detecting the dj identifier, the DM routes the packet to the client (S12) so that the client can readily ascertain that the necessary modification have been made to the respective job tickets of the print job and the fax job.

Numerous features of the above-described embodiment will be appreciated by those skilled in the art. First, a system is provided in which a document manager for coordinating the storing and processing jobs each having image data and a job ticket is relieved of the burden of managing various functions associated with a distribution job including image data and multiple job tickets.

Second, since the distribution agent is, in the preferred embodiment, a module, the document processing system can be expanded readily with a minimum amount of revision to the software of the document server.

Third, handling distribution jobs at the distribution agent rather than the document manager is believed to result in both flexibility and efficiencies that could not be achieved by managing the distribution jobs at the document manager.

Fourth, a technique is provided for a document server in which the processing of a distribution job is advantageously managed by a distribution agent so that processing of the distribution job can be paused in response to a request by a client to modify or cancel one or more attributes of the distribution job.

Next, through employment of the distribution agent, the amount of effort expended by the document manager to determine the respective statuses of jobs in the distribution job is minimized. As with the alteration approach, the document manager, whose assistance/management is demanded highly by the system as a whole is not burdened with determining which jobs in the distribution job are in need of status information.

Finally, through employment of a database at the distribution agent, values for attributes of the distribution job can be set automatically.

## Claims

1. A document server for managing the storing or processing of a distribution job in a document processing system, wherein the distribution job is being distributed to a number of recipients, and includes an image data set as well as a first job ticket and a second job ticket, the first and second job tickets including first and second sets of attributes, respectively, describing a manner in which first and second copies of the image data set are to be stored in or processed by the document processing system
the document processing system comprising:
a first virtual service for storing or processing the first copy of the image data set in accordance with the first attribute set and a second virtual service for storing or processing a second copy of the image data set in accordance with the second attribute set;
the document server comprising a document manager, communicating with said first and second virtual services, for coordinating the storing or processing of the first and second copies of the image data set at said first and second virtual services;
a distribution agent, communicating with said document manager, for receiving the first and second job tickets; and
said distribution agent transmitting (S3a) a copy of the first job ticket to said document manager so that said document manager routes the first copy of the image data set and the copy of the first job ticket to said first virtual service (S5), and said distribution agent transmitting (S3b) a copy of the second job ticket to said document manager so that said document manager routes the second copy of the image data set and the copy of the second job ticket to said second virtual service (S6).

2. The document server as claimed in claim 1, wherein the distribution agent receives the first and second job tickets of the distribution job as a single package, said distribution agent receiving a distribution job alteration request after the copies of the first and second job tickets have been transmitted to said document manager, the distribution job alteration request including information indicating an alteration to be made in one or more of the attributes of each of the first and second attribute sets, said distribution agent, in response to receiving the distribution job alteration request, transmitting a task halting request to said document manager, said document manager, in response to receiving the task halting signal, causing any ongoing activities, relative to the first and second copies of the image data set, to be halted.

3. The document server as claimed in claim 1, wherein the distribution agent receives the first and second job tickets of the distribution job as a single package, said distribution agent receiving a first distribution job status request after the copies of the first and second job tickets have been transmitted to said document manager, said distribution agent transmitting a second distribution job status request, to said document manager, for directing said document manager to determine an extent to which each of the first copy of the image data set and the second copy of the image data set has been processed by the document server, said document manager, in response to receiving the second distribution job status request, causing the extent to which each of the first copy of the image data set and the second copy of the image data set has been processed by the document server to be determined.

## Patentansprüche

1. Dokumenten-Server für das Management der Speicherung oder Verarbeitung eines Verteilungs-Auftrags in einem Dokumentenverarbeitungssystem, wobei der Verteilungs-Auftrag zu einer Anzahl von Empfängern verteilt werden soll, umfassend einen Bilddatensatz ebenso wie ein erstes Auftrag-Ticket und ein zweites Auftrag-Ticket, wobei das erste und das zweite Auftrag-Ticket einen ersten und einen zweiten Satz von Attributen jeweils umfassen, die eine Art und Weise beschreiben, in der erste und zweite Kopien des Bilddatensatzes in dem Dokumentenverarbeitungssystem gespeichert oder durch dieses verarbeitet werden sollen,
wobei das Dokumentenverarbeitungssystem aufweist:
einen ersten, virtuellen Service zum Speichern oder Verarbeiten der ersten Kopie des Bilddatensatzes entsprechend dem ersten Attribut-Satz, und einen zweiten, virtuellen Service zum Speichern oder Verarbeiten einer zweiten Kopie des Bilddatensatzes entsprechend dem zweiten Attribut-Satz;
wobei der Dokumenten-Server einen Dokumentenmanager aufweist, der mit dem ersten und dem zweiten, virtuellen Service kommuniziert, zum Koordinieren der Speicherung oder Verarbeitung der ersten und zweiten Kopien des Bilddatensatzes an dem ersten und dem zweiten, virtuellen Service;
einen Verteilungs-Agenten, der mit dem Dokumentenmanager kommuniziert, zum Empfangen des ersten und des zweiten Auftrag-Tickets; und
wobei der Verteilungs-Agent eine Kopie des ersten Auftrag-Tickets zu dem Dokumentenmanager so überträgt (S3a), dass der Dokumentenmanager die erste Kopie des Bilddatensatzes und die Kopie des ersten Auftrag-Tickets zu dem ersten, virtuellen Service weiterführt (S5), und der Verteilungs-Agent eine Kopie des zweiten Auftrag-Tickets zu dem Dokumentenmanager so überträgt (S3b), dass der Dokumentenmanager die zweite Kopie des Bilddatensatzes und die Kopie des zweiten Auftrag-Tickets zu dem zweiten, virtuellen Service weiterführt (S6).

2. Dokumenten-Server nach Anspruch 1, wobei der Verteilungs-Agent das erste und das zweite Auftrag-Ticket des Verteilungs-Auftrags als ein einzelnes Datenpaket empfängt,
wobei der Verteilungs-Agent eine Verteilungs-Auftrag-Änderungsanforderung empfängt, nachdem die Kopien des ersten und des zweiten Auftrag-Tickets zu dem Dokumentenmanager übertragen worden sind, wobei die Verteilungs-Auftrag-Änderungsanforderung Informationen umfasst, die eine Änderung anzeigen, die in einem oder mehreren der Attribute jedes des ersten und des zweiten Attribut-Satzes vorgenommen werden sollen, wobei der Verteilungs-Agent, auf einen Empfang der Verteilungs-Auftrag-Änderungsanforderung hin, eine Aufgabe-Verzögerungs-Anforderung zu dem Dokumentenmanager überträgt, wobei der Dokumentenmanager auf ein Empfangen des Aufgabe-Verzögerungs-Signals hin bewirkt, dass irgendwelche stattfindenden Aktivitäten, relativ zu der ersten und der zweiten Kopie des Bilddatensatzes, verzögert werden.

3. Dokumenten-Server nach Anspruch 1, wobei der Verteilungs-Agent das erste und das zweite Auftrag-Ticket des Verteilungs-Auftrags als ein einzelnes Datenpaket empfängt,
wobei der Verteilungs-Agent eine erste Verteilungs-Auftrag-Status-Anforderung empfängt, nachdem die Kopien des ersten und des zweiten Auftrag-Tickets zu dem Dokumentenmanager übertragen worden sind, wobei der Verteilungs-Agent eine zweite Verteilungs-Auftrag-Status-Anforderung zu dem Dokumentenmanager überträgt, um den Dokumentenmanager anzuweisen, einen Umfang zu bestimmen, in dem sowohl die erste Kopie des Bilddatensatzes als auch die zweite Kopie des Bilddatensatzes durch den Server verarbeitet worden sind, wobei der Dokumentenmanager auf ein Empfangen der zweiten Verteilungs-Auftrag-Status-Anforderung hin bewirkt, dass der Umfang, in dem sowohl die erste Kopie des Bilddatensatzes als auch die zweite Kopie des Bilddatensatzes durch den Dokumenten-Server verarbeitet worden ist, bestimmt wird.

## Revendications

1. Serveur de document pour la gestion du stockage ou du traitement d'une tâche de distribution dans un système de traitement de document, dans lequel la tâche de distribution est distribuée à un certain nombre de destinataires et comprend :
un ensemble de données d'image de même qu'un premier ticket de tâche et qu'un second ticket de tâche, les premier et second tickets de tâche incluant des premier et second ensembles d'attributs, respectivement, décrivant un mode dans lequel des première et seconde copies de l'ensemble de données d'image doivent être stockées dans, ou traitées par, le système de traitement de document, le système de traitement de document comprenant :
un premier service virtuel pour stocker ou traiter la première copie de l'ensemble de données d'image en conformité avec le premier jeu d'attributs et un second service virtuel pour stocker ou traiter une seconde copie de l'ensemble de données d'image en conformité avec le second jeu d'attributs ;
le serveur de document comprenant un gestionnaire de document communiquant avec lesdits premier et second services virtuels pour coordonner le stockage ou le traitement des première et seconde copies des ensembles de données d'image au niveau desdits premier et second services virtuels ;
un agent de distribution communiquant avec ledit gestionnaire de document pour recevoir les premier et second tickets de tâche ; et
ledit agent de distribution transmettant (S3a) une copie du premier ticket de tâche audit gestionnaire de document, de sorte que ledit gestionnaire de document achemine la première copie de l'ensemble de données d'image et la copie du premier ticket de tâche audit premier service virtuel (S5) et ledit agent de distribution transmettant (S3b) une copie du second ticket de tâche audit gestionnaire de document, de sorte que ledit gestionnaire de document achemine la seconde copie de l'ensemble de données d'image et la copie du second ticket de tâche audit second service virtuel (6).

2. Serveur de document selon la revendication 1, dans lequel l'agent de distribution reçoit les premier et second tickets de tâche de la tâche de distribution sous la forme d'un bloc unique, ledit agent de distribution recevant une requête de modification de tâche de distribution après que les copies des premier et second tickets de tâche ont été transmises audit gestionnaire de document, la requête de modification de tâche de distribution incluant une information indiquant qu'une modification doit être apportée à l'un ou à plusieurs des attributs de chacun des premier et second jeux d'attributs, ledit agent de distribution, en réponse à la réception de la requête de modification de tâche de distribution, transmettant une requête d'interruption de tâche audit gestionnaire de document, ledit gestionnaire de document, en réponse à la réception du signal d'interruption de tâche, amenant toutes les activités en cours reliées aux première et seconde copies de l'ensemble de données d'image, à être interrompues.

3. Serveur de document selon la revendication 1, dans lequel l'agent de distribution reçoit les premier et second tickets de tâche de la tâche de distribution sous la forme d'un bloc unique, ledit agent de distribution recevant une première requête d'état de tâche de distribution après que les copies des premier et second tickets de tâche ont été transmises audit gestionnaire de document, ledit agent de distribution transmettant une seconde requête d'état de tâche de distribution audit gestionnaire de document pour indiquer audit gestionnaire de document d'avoir à déterminer le point auquel chacune de la première copie de l'ensemble de données d'image et de la seconde copie de l'ensemble de données d'image a été traitée par le serveur de document, ledit gestionnaire de document, en réponse à la réception de la seconde requête d'état de tâche de distribution amenant le point auquel chacune de la première copie de l'ensemble de données d'image et de la seconde copie de l'ensemble de données d'image a été traitée par le serveur de document à être déterminé.
